# EUROPÄISCHE PATENTSCHRIFT

(11) **EP 1 300 271 B1**
(45) Veröffentlichungstag und Bekanntmachung des Hinweises auf die Patenterteilung: **12.07.2006**
(21) Anmeldenummer: 02021942.4
(22) Anmeldetag: 30.09.2002
(51) Int. Cl.: B60J 7/047, B62D 65/00

(54) **Dachaufbau eines Fahrzeugs**
Roof structure for a motor vehicle
Structure de toit pour un véhicule

(30) Priorität: 01.10.2001 DE 10148537
(43) Veröffentlichungstag der Anmeldung: 09.04.2003
(73) Patentinhaber: Webasto Vehicle Systems International GmbH, 82131 Stockdorf (DE)
(72) Erfinder: De Gaillard, Francois, 85390 Mouilleron en pareds (FR)
(74) Vertreter: Konnerth, Dieter Hans

(56) Entgegenhaltungen:
- DE-A- 19 908 253
- DE-A- 19 949 468
- FR-A- 2 744 957
- US-A- 4 801 174
- US-B1- 6 279 989

## Beschreibung

Die Erfindung betrifft einen Dachaufbau eines Fahrzeugs mit einer bewegbaren vorderen Deckeleinrichtung zum Verschließen oder zumindest teilweisen Freigeben einer vorderen Dachöffnung und mit einer sich an die vordere Deckeleinrichtung anschließenden Heckklappe oder Heckscheibe, die zum Freigeben einer hinteren Dachöffnung um ihren Vorderrand hochschwenkbar ist.

Aus der DE 199 08 253 A1 ist eine Karosseriestruktur für ein Fahrzeug bekannt geworden, die ein Fahrzeugdach mit einem vorderen Deckelelement und einem hinteren Deckelelement aufweist. Das vordere Deckelelement kann an dachfesten Führungen zum Freigeben einer vorderen Dachöffnung über das hintere Deckelelement verschoben werden. Zum Freigeben einer hinteren Dachöffnung kann das hintere Deckelelement, das an seinem Vorderrand schwenkgelagert ist, mit seinem Hinterrand ausgestellt werden.

Aus der DE 199 49 468 A1 ist ein Fahrzeugdach mit einem Dachmodul bekannt geworden, an dessen Modulrahmen ein transparenter Schiebedeckel in Dachlängsrichtung verschiebbar gelagert und nach hinten unter eine sich innerhalb des Modulrahmens anschließende Heckscheibe schiebbar ist, um einen vorderen Teil einer Dachöffnung freizulegen. Die Heckscheibe ist an ihrem Vorderrand am Modulrahmen schwenkbar gelagert, so daß sie mit ihrem Hinterrand in eine Lüftungsstellung ausstellbar ist. Das Dachmodul wird bei der Montage durch eine Frontscheibenöffnung in das Fahrzeug eingeschoben und von unten an dem Dachrahmen des Fahrzeugs befestigt.

Aufgabe der Erfindung ist es, einen eingangs genannten Dachaufbau zu schaffen, der einfach aufgebaut, montierbar und in Lüftungsstellungen einstellbar ist und zum Anbringen am Fahrzeugdach in unterschiedlichen Varianten vorgesehen ist.

Diese Aufgabe wird bei dem oben genannten Dachaufbau erfindungsgemäß dadurch gelöst, daß die vordere Deckeleinrichtung an einem der vorderen Dachöffnung zugeordneten Modulrahmen gelagert ist, der an einem karosseriefesten Dachrahmen angebracht ist und an seinem hinteren Rahmenquerteil eine Schwenklagereinrichtung für die sich vom Modulrahmen nach hinten erstreckende Heckklappe oder Heckscheibe aufweist. Da die Lagerungen und Führungen für die Deckeleinrichtung und die Heckklappe oder Heckscheibe an dem Modulrahmen angeordnet sind, kann dieser als Baueinheit mit der Deckeleinrichtung vormontiert werden, so daß die Endmontage am Fahrzeug wesentlich schneller erfolgen kann. Die Heckklappe oder Heckscheibe kann entweder Teil der vormontierten Baueinheit sein oder sie wird nachträglich an die Lagerung am Modulrahmen angebracht.

Vorteilhafte Ausgestaltungen der Erfindung sind in den Unteransprüchen angegeben.

Vorzugsweise bildet ein Deckel, insbesondere ein Glasdeckel, die vordere Dekkeleinrichtung, der in einer Öffnungsstellung, in der zumindest sein Hinterrand angehoben ist, nach hinten über die Heckscheibe verfahrbar ist.

Wenn der Deckel insbesondere ein ausstellbarer und nach hinten verfahrbarer Spoilerdeckel ist, müssen keine Führungen für den Deckel an den seitlichen Dachholmen außenseitig vorgesehen sein, die bei einem außengeführten Deckel ansonsten erforderlich wären.

In alternativer Gestaltung bildet ein zumindest zwei ausstellbare und verschiebbare Lamellen umfassendes Lamellendach die vordere Deckeleinrichtung, wobei die Lamellen zweckmäßigerweise Glaslamellen sind.

Wenn der Modulrahmen eine Blockiereinrichtung enthält, mit der das Hochschwenken der Heckscheibe verhindert oder der Schwenkwinkel der Heckscheibe begrenzt werden kann, wird eine sichere Bedienung der Heckklappe bzw. Heckscheibe gewährleistet.

Nachfolgend wird ein Ausführungsbeispiel des Dachaufbaus unter Bezugnahme auf die Zeichnung näher erläutert. Es zeigt:
- Fig. 1: in perspektivischer Draufsicht ein Fahrzeug mit einem vorderen geschlossenen Deckel und einer hinteren hochgeschwenkten Heckscheibe;
- Fig. 2: in perspektivischer Seitenansicht das Fahrzeug mit geschlossener Heckscheibe und geöffnetem Deckel;
- Fig. 3: in perspektivischer Draufsicht das Fahrzeug mit einem vorderen geschlossenen Deckel und einer hinteren hochgeschwenkten Heckscheibe;
- Fig. 4: in perspektivischer Seitenansicht das Fahrzeug mit geschlossener Heckscheibe und geöffnetem Deckel;
- Fig. 5: in perspektivischer Draufsicht in Explosionsdarstellung eine Rohkarosserie des Fahrzeugs mit einem erfindungsgemäßen Dachaufbau mit einem Modulrahmen;
- Fig.6: in einer Oberansicht in schematischer Darstellung den Modulrahmen;
- Fig. 7: in einer Schnittansicht den Modulrahmen entlang der Linie A - A in Fig. 6; und

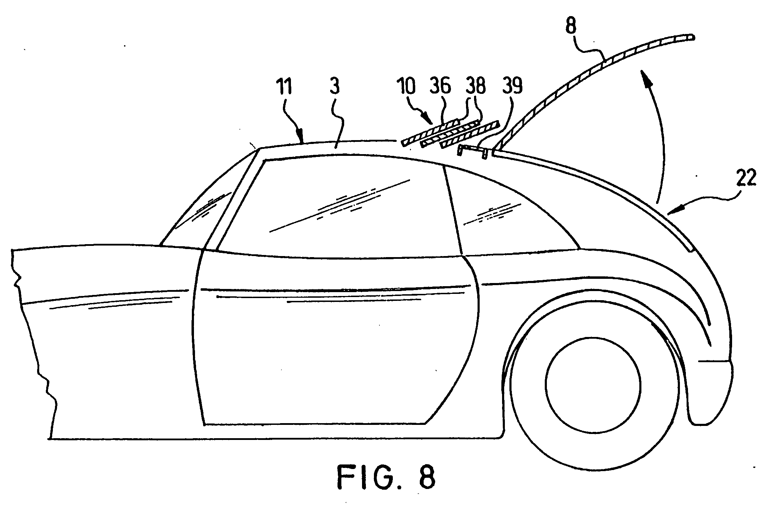

- Fig. 8: in einer Seitenansicht ein Fahrzeug mit dem erfindungsgemäßen Dachaufbau, der ein Lamellendach für die vordere Dachöffnung enthält.

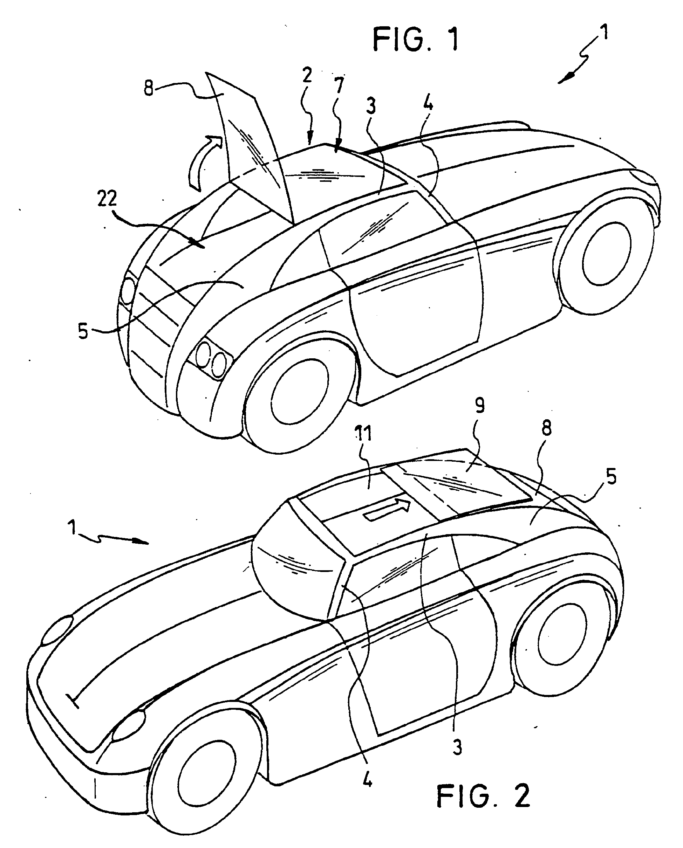

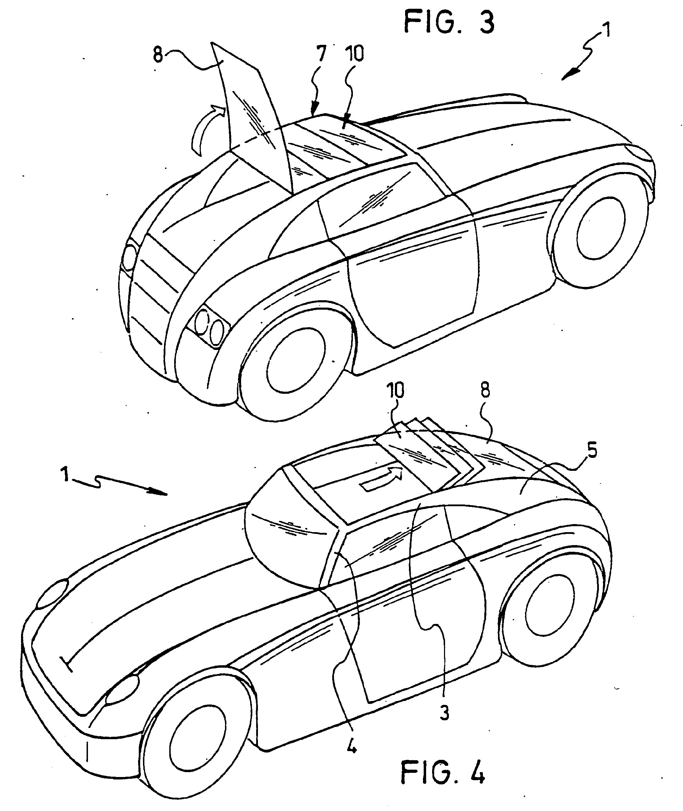

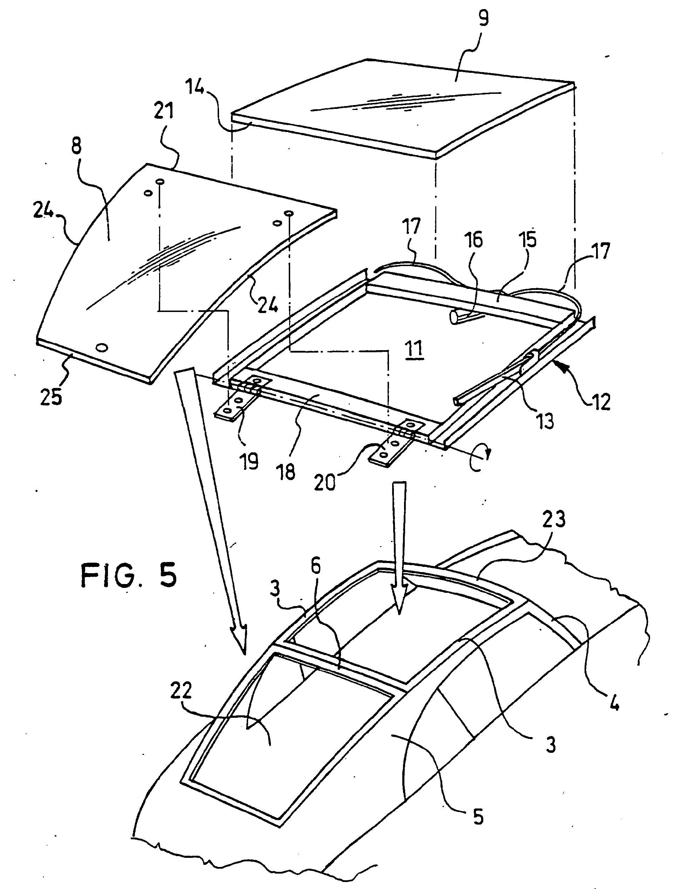

Ein Fahrzeug 1 (siehe Fig. 1 und 2), im Ausführungsbeispiel ein zweitüriges Coupe, enthält einen Dachaufbau 2 mit seitlichen Dachlängsholmen 3, die sich vorne an die A-Säulen 4 anschließen und hinten in die C-Säulen 5 übergehen oder deren Funktion übernehmen. Zwischen den beiden Dachlängsholmen 3, die durch eine Querstrebe 6 versteift sein können (siehe Fig. 5), ist eine vordere Deckeleinrichtung 7 und eine schwenkbare Heckscheibe 8 angeordnet. Die Deckeleinrichtung 7 ist beispielsweise ein Deckel 9 insbesondere eines Spoilerdaches oder ein Lamellendach 10 (siehe Fig. 3 und 4), mit dem eine vordere Dachöffnung 11 wahlweise verschließbar oder zumindest teilweise freilegbar ist.

Die Deckeleinrichtung 7 bzw. der Deckel 9 ist an einem Modulrahmen 12 mittels seitlicher Lagereinrichtungen 13 (nur die rechte Lagereinrichtung 13 ist in Fig. 5 dargestellt) gelagert und in eine Belüftungsstellung mit angehobenem Dekkelhinterrand 14 anhebbar und mit angehobenem Hinterrand 14 in Art eines Spoilerdaches zum Freilegen der vorderen Dachöffnung 11 nach hinten verfahrbar. Eine derartige Lagereinrichtung ist beispielsweise in der WO 00/41835 beschrieben, so daß zur näheren Erläuterung dieser beispielhaften Lagereinrichtung 13 auf diese Druckschrift verwiesen wird.

An dem Modulrahmen 12, beispielsweise an einem vorderen Rahmenquerteil 15 des Modulrahmens 12, ist ein Antriebsmotor 16 angebracht, der über ein jeweiliges Antriebskabel 17 mit den Lagereinrichtungen 13 verbunden ist und diese zum Ausstellen und Verfahren des Deckels 9 bewegt. An einem hinteren Rahmenquerteil 18 des Modulrahmens 12 ist eine Schwenklagereinrichtung für die Heckscheibe 8 angeordnet, die beispielsweise zwei Scharniere 19 und 20 aufweist, die mit der Heckscheibe 8 im Bereich ihres Vorderrandes 21 verbunden sind.

Der Modulrahmen 12 wird als vorgefertigte Baueinheit, die die vordere Deckeleinrichtung 7 bzw. den Deckel 9 für die vordere Dachöffnung 11 und die eine hintere Dachöffnung 22 abdeckende schwenkbare Heckscheibe 8 sowie die Lagereinrichtungen 13 und die Antriebseinrichtung 16, 17 für den vorderen Deckel 9 enthält, an den Dachlängsholmen 3 und bedarfsweise an einem Windlauf 23 wie auch an der Querstrebe 6 befestigt. Eine Abdichtung der Heckscheibe 8 erfolgt beispielsweise am Vorderrand 21 der Heckscheibe 8 über eine am Modulrahmen 12 angebrachte Dichtung und an ihren Seitenrändern 24 und am Hinterrand 25 über eine an den entsprechenden karosseriefesten Dachrahmenteilen angebrachte Dichtung oder über eine umlaufende Dichtung, die beispielsweise an einem die hintere Dachöffnung 22 umgreifenden Dichtungsrahmen angebracht ist, der an den karosseriefesten Dachrahmenteilen befestigt ist.

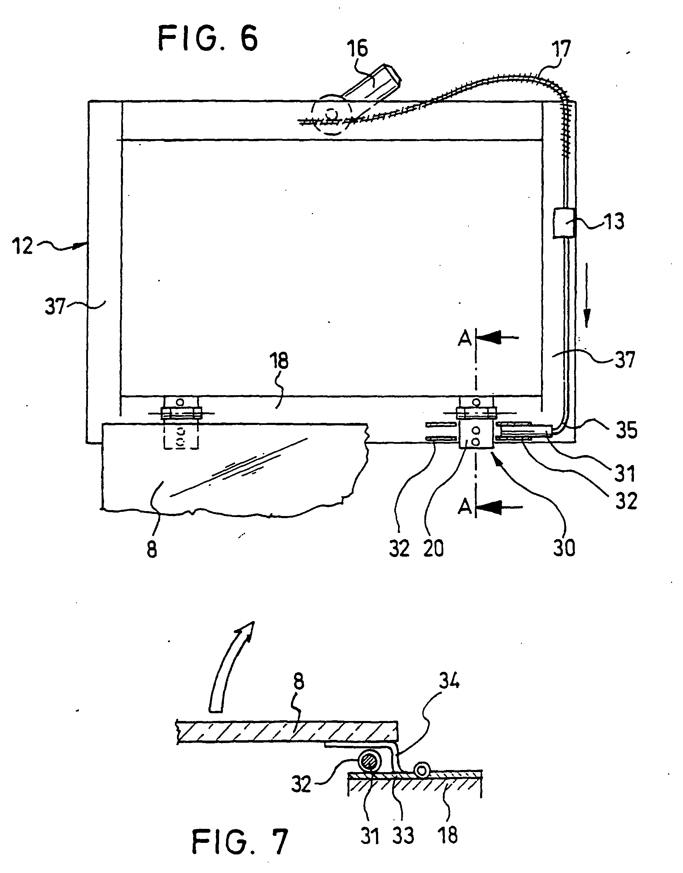

Am Modulrahmen kann des weiteren eine Blockiereinrichtung 30 vorgesehen sein, mittels der das Hochschwenken der Heckscheibe 8 blockiert werden kann. Die Blockiereinrichtung 30 enthält beispielsweise einen Riegelstift 31, der am Modulrahmen 12 neben dem Scharnier 20 angeordnet und an einer Führung 32 verschiebbar gelagert ist, so daß er in einer ausgefahrenen Blockierstellung (Fig. 7) vor oder über einer Zunge 33 des bewegbaren Scharnierteils 34 angeordnet ist und damit das Hochschwenken der Zunge 33 und des Scharnierteils 34 und damit der Heckscheibe 8 verhindern kann. In seiner zurückgezogenen Stellung gestattet der Riegelstift 31 das Hochschwenken der Heckscheibe 8 (siehe Fig. 6).

Der Riegelstift 31 kann in seiner Blockierstellung mit einem bestimmten Abstand über der Zunge 33 angeordnet sein, so daß ein begrenzter Schwenkwinkel des Scharnierteils 34 bzw. der Heckscheibe 8 zugelassen ist, bis die Zunge 33 an dem Riegelstift 31 anschlägt und ihre weitere Schwenkbewegung blockiert ist.

Die Betätigung der Blockiereinrichtung 30 bzw. des Riegelstifts 31 erfolgt z. B. über das Antriebskabel 17 für die Lagereinrichtung 13, das an seinem verlängerten Auslaufende 35 mit dem Riegelstift 31 fest verbunden oder an diesen ankoppelbar ist, oder über eine anderweitige Koppelung mit dem bewegbaren Deckel 9 bzw. der Deckeleinrichtung 7.

Die Blockiereinrichtung 30 kann für die Schwenklagereinrichtung oder für nur eines der Scharniere 19, 20 in einfacher Ausfertigung mit einem Riegelstift 31 oder in zweifacher Ausfertigung für jedes der Scharniere 19, 20 vorgesehen sein.

In alternativer Gestaltung kann statt der mechanisch ausgelösten Betätigung der Blockiereinrichtung 30 auch eine Sensorbetätigung vorgesehen sein (nicht dargestellt), bei der ein Sensor beispielsweise die Stellung des vorderen Deckels 9 erfaßt und in Abhängigkeit eines entsprechenden Sensorsignals z. B. einen Elektromagnet steuert, der den Riegelstift 31 oder ein anderes Riegelelement betätigt.

Die Blockiereinrichtung 30 kann auch auf ein Schloß einwirken, mit dem die Heckscheibe 8 an ihrem Unterende an der Karosserie verriegelbar ist.

Das Lamellendach 10, das in alternativer Gestaltung die Deckeleinrichtung 7 für die vordere Dachöffnung 11 bildet, enthält zumindest zwei Lamellen, insbesondere Glaslamellen. Der grundsätzliche Aufbau eines Lamellendaches ist beispielsweise in der DE 196 08 916 C1 oder der EP 0 978 400 A2 beschrieben, auf die zur näheren Erläuterung verwiesen wird. Die Lamellen 36 sind beidseits jeweils an einer Führungsschiene an dem seitlichen Rahmenteil 37 des Modulrahmens 12 verschiebbar und mit ihrem Hinterrand 38 ausstellbar gelagert. Wenn das Lamellendach 10 hinten an die Heckscheibe 8 angrenzt und beim Öffnen des Lamellendaches 10 die ausgestellte hintere Lamelle 36 über die Heckscheibe 8 reicht, kann ebenfalls mittels der Blockiereinrichtung 30 die Heckscheibe 8 gegen Öffnen blockiert sein. Andererseits kann das hintere Rahmenquerteil 18 des Modulrahmens 12 einen außenseitigen Dachhautabschnitt 39 mit in Dachlängsrichtung größerer Breite aufweisen, so daß die vordere Dachöffnung 11 und die hintere Dachöffnung 22 voneinander weiter beabstandet sind im Gegensatz zu den in den Fig. 1 bis 4 dargestellten Beispielen. Auf diese Weise kann auch bei geöffnetem Lamellendach 10, bei dem die hintere Lamelle 36 über die vordere Dachöffnung 11 nach hinten hinaussteht, die Heckscheibe 8 ohne Kollisionsgefahr hochgeschwenkt werden.

Die Heckscheibe 8, die auch als Heckklappe mit einem Rahmen gebildet sein kann, kann mittels eines Feder-Dämpferelements (nicht dargestellt) in der hochgeschwenkten Endstellung oder in einer Zwischenstellung gehalten werden. Das Feder-Dämpferelement ist zweckmäßigerweise an der Schwenklagereinrichtung für die Heckscheibe 8 und damit auch an dem Modulrahmen 12 angebracht.

Der Modulrahmen 12 ist somit als vorgefertigte Baueinheit wahlweise mit einem vorderen Deckel 9 oder mit einem vorderen Lamellendach 10 und mit an dem Modulrahmen 12 schwenkbar gelagerter Heckscheibe 8 bzw. Heckklappe zur Montage an dem karosseriefesten Dachrahmen vorbereitet.

### Bezugszeichenliste

- 1: Fahrzeug
- 2: Dachaufbau
- 3: Dachlängsholm
- 4: A-Säule
- 5: C-Säule
- 6: Querstrebe
- 7: vordere Deckeleinrichtung
- 8: Heckscheibe
- 9: Deckel
- 10: Lamellendach
- 11: vordere Dachöffnung
- 12: Modulrahmen
- 13: Lagereinrichtung
- 14: Deckelhinterrand
- 15: vorderes Rahmenquerteil
- 16: Antriebsmotor
- 17: Antriebskabel
- 18: hinteres Rahmenquerteil
- 19: Scharnier
- 20: Scharnier
- 21: Vorderrand
- 22: hintere Dachöffnung
- 23: Windlauf
- 24: Seitenrand
- 25: Hinterrand

- 30: Blockiereinrichtung
- 31: Riegelstift
- 32: Führung
- 33: Zunge
- 34: Scharnierteil
- 35: Auslaufende
- 36: Lamelle
- 37: seitliches Rahmenteil
- 38: Hinterrand
- 39: Dachhautabschnitt

## Patentansprüche

1. Dachaufbau eines Fahrzeugs mit einer bewegbaren vorderen Deckeleinrichtung zum Verschließen oder zumindest teilweisen Freigeben einer vorderen Dachöffnung und mit einer sich an die vordere Deckeleinrichtung anschließenden Heckklappe oder Heckscheibe, die zum Freigeben einer hinteren Dachöffnung um ihren Vorderrand hochschwenkbar ist,
**dadurch gekennzeichnet,**
**daß** die vordere Deckeleinrichtung (9; 10) an einem der vorderen Dachöffnung (11) zugeordneten Modulrahmen (12) gelagert ist, der an einem karosseriefesten Dachrahmen (3) angebracht ist und an seinem hinteren Rahmenquerteil (18) eine Schwenklagereinrichtung (19, 20) für die sich vom Modulrahmen nach hinten erstreckende Heckklappe oder Heckscheibe (8) aufweist.

2. Dachaufbau nach Anspruch 1,
**dadurch gekennzeichnet, daß** ein Deckel (9), insbesondere ein Glasdeckel, die vordere Deckeleinrichtung (7) bildet und in einer Öffnungsstellung, in der zumindest sein Hinterrand (14) angehoben ist, nach hinten über die Heckscheibe (8) verfahrbar ist.

3. Dachaufbau nach Anspruch 2,
**dadurch gekennzeichnet, daß** der Deckel (9) ein ausstellbarer und nach hinten verfahrbarer Spoilerdeckel ist.

4. Dachaufbau nach Anspruch 1,
**dadurch gekennzeichnet, daß** ein zumindest zwei ausstellbare und verschiebbare Lamellen (36) umfassendes Lamellendach (10) die vordere Deckeleinrichtung (7) bildet.

5. Dachaufbau nach einem der Ansprüche 1 bis 4,
**dadurch gekennzeichnet, daß** der Modulrahmen (12) an karosseriefesten seitlichen Dachlängsholmen (3) angebracht ist.

6. Dachaufbau nach Anspruch 5,
**dadurch gekennzeichnet, daß** der Modulrahmen (12) die Lagereinrichtung (19, 20) für die Deckeleinrichtung (7) und eine Antriebseinrichtung (16, 17) zum Verstellen der Deckeleinrichtung (7) aufweist.

7. Dachaufbau nach Anspruch 5 oder 6,
**dadurch gekennzeichnet, daß** der Modulrahmen (12) eine Blockiereinrichtung (30) enthält, mit der das Hochschwenken der Heckscheibe (8) verhindert oder der Schwenkwinkel der Heckscheibe (8) begrenzt werden kann.

8. Dachaufbau nach Anspruch 7,
**dadurch gekennzeichnet, daß** die Blockiereinrichtung (30) mit einer Antriebseinrichtung (17) zum Verstellen der Deckeleinrichtung (7) gekoppelt ist.

9. Dachaufbau nach Anspruch 7,
**dadurch gekennzeichnet, daß** die Blockiereinrichtung (30) durch Steuerung mittels eines Sensors ausgelöst wird.

10. Dachaufbau nach einem der Ansprüche 7 bis 9,
**dadurch gekennzeichnet, daß** die Blockiereinrichtung (30) in Abhängigkeit der Stellung der vorderen Deckeleinrichtung (7) aktivierbar ist.

11. Dachaufbau nach einem der Ansprüche 7 bis 10,
**dadurch gekennzeichnet, daß** die Blockiereinrichtung (30) ein bewegbares Riegelteil (31) zum Blockiereingriff an der Schwenklagereinrichtung (19, 20) der Heckscheibe (8) aufweist.

12. Dachaufbau nach einem der Ansprüche 1 bis 11,
**dadurch gekennzeichnet, daß** das hintere Rahmenquerteil (18) des Modulrahmens (12) einen die vordere Dachöffnung (11) von der hinteren Dachöffnung (22) trennenden Dachhautabschnitt (39) bildet.

13. Dachaufbau nach einem der Ansprüche 1 bis 12,
**dadurch gekennzeichnet, daß** bei geöffnetem Lamellendach (10) die hintere Lamelle (36) oberhalb des Dachhautabschnitts (39) ohne Behinderung der Schwenkbarkeit der Heckscheibe (8) angeordnet ist.

## Claims

1. Roof structure for a vehicle, having a movable front panel device for closing or at least partially opening a front roof opening, and having a boot lid or rear window adjoining the front panel device, which can be pivoted up about its front edge in order to open a rear roof opening, **characterized in that** the front panel device (9; 10) is mounted on a module frame (12) which is assigned to the front roof opening (11), is fitted to a roof frame (3) fixed to the bodywork and, on its rear transverse frame part (19) has a pivoting bearing device (19, 20) for the boot lid or rear window (8) extending rearwards from the module frame.

2. Roof structure according to Claim 1, **characterized in that** a panel (9), in particular a glass panel, forms the front panel opening (7) and, in an open position, in which at least its rear edge (14) is raised, can be moved rearwards over the rear window (8).

3. Roof structure according to Claim 2, **characterized in that** the panel (9) is a spoiler panel which can be raised and moved rearwards.

4. Roof structure according to Claim 1, **characterized in that** a louvred roof (10) comprising at least two louvres (36) that can be raised and displaced form the front panel device (7).

5. Roof structure according to one of Claims 1 to 4, **characterized in that** the module frame (12) is fitted to two lateral longitudinal roof members fixed to the bodywork.

6. Roof structure according to Claim 5, **characterized in that** the module frame (12) has the mounting device (19, 20) for the panel device (7) and a drive device (16, 17) for adjusting the panel device (7).

7. Roof structure according to Claim 5 or 6, **characterized in that** the module frame (12) contains a blocking device (30) with which it is possible to prevent the rear window (8) being pivoted up or to limit the pivoting angle of the rear window (8).

8. Roof structure according to Claim 7, **characterized in that** the blocking device (30) is coupled to a drive device (17) for adjusting the panel device (7).

9. Roof structure according to Claim 7, **characterized in that** the blocking device (30) is triggered under control by means of a sensor.

10. Roof structure according to one of Claims 7 to 9, **characterized in that** the blocking device (30) can be activated as a function of the position of the front panel device (7).

11. Roof structure according to one of Claims 7 to 10, **characterized in that** the blocking device (30) has a movable lock part (31) for blocking engagement on the pivoting bearing device (19, 20) of the rear window (8).

12. Roof structure according to one of Claims 1 to 11, **characterized in that** the rear transverse frame part (18) of the module frame (12) forms a roof skin section (39) separating the front roof opening (11) from the rear roof opening (22).

13. Roof structure according to one of Claims 1 to 12, **characterized in that**, when the louvred roof (10) is open, the rear louvre (56) is arranged above the roof skin section (39) without hampering the ability of the rear window (8) to pivot.

## Revendications

1. Structure de toit d'un véhicule, avec un dispositif formant couvercle avant déplaçable, pour fermer ou au moins partiellement libérer une ouverture de toit avant, et avec un hayon ou vitre arrière, se raccordant au dispositif formant couvercle avant, susceptible d'être relevé(e) par pivotement autour de son bord avant, pour libérer une ouverture de toit arrière,
**caractérisée en ce que**
le dispositif formant couvercle avant (9 ; 10) est monté sur un cadre de module (12) associé à l'ouverture de toit avant (11), cadre de module monté sur un cadre de toit (3) fixé à la carrosserie et présentant, sur sa partie transversale de cadre (18) arrière, un dispositif formant palier de pivotement (19, 20) pour le hayon ou vitre arrière (8), s'étendant vers l'arrière depuis le cadre de module.

2. Structure de toit selon la revendication 1, **caractérisée en ce qu'**un couvercle (9), en particulier un couvercle en verre, constitue le dispositif formant couvercle avant (7) et, à une position d'ouverture, à laquelle au moins son bord arrière (14) est levé, est déplaçable vers l'arrière, sur la vitre arrière (8).

3. Structure de toit selon la revendication 2, **caractérisée en ce que** le couvercle (9) est un couvercle formant déflecteur, susceptible d'être soulevé et déplaçable vers l'arrière.

4. Structure de toit selon la revendication 1, **caractérisée en ce qu'**un toit à lamelles (10), comprenant au moins deux lamelles (36) soulevables et coulissantes, constitue le dispositif formant couvercle avant (7).

5. Structure de toit selon l'une des revendications 1 à 4, **caractérisée en ce que** le cadre de module (12) est fixé sur des montants longitudinaux de toit (3) latéraux, solidaires de la carrosserie.

6. Structure de toit selon la revendication 5, **caractérisée en ce que** le cadre de module (12) présente le dispositif formant palier (19, 20) pour le dispositif formant couvercle (7), et un dispositif d'entraînement (16, 17) pour le déplacement du dispositif formant couvercle (7).

7. Structure de toit selon la revendication 5 ou 6, **caractérisée en ce que** le cadre de module (12) contient un dispositif de blocage (30), à l'aide duquel le relevage par pivotement de la vitre arrière (8) peut être empêché, ou bien l'angle de pivotement de la vitre arrière (8) peut être limité.

8. Structure de toit selon la revendication 7, **caractérisée en ce que** le dispositif de blocage (30) est couplé à un dispositif d'entraînement (17), prévu pour le déplacement du dispositif formant couvercle (7).

9. Structure de toit selon la revendication 7, **caractérisée en ce que** le dispositif de blocage (30) est déclenché par commande au moyen d'un capteur.

10. Structure de toit selon l'une des revendications 7 à 9, **caractérisée en ce que** le dispositif de blocage (30) est activable en fonction de la position du dispositif formant couvercle avant (7).

11. Structure de toit selon l'une des revendications 7 à 10, **caractérisée en ce que** le dispositif de blocage (30) présente une partie de verrou (31) déplaçable pour l'engagement de blocage sur le dispositif formant palier de pivotement (19, 20) de la vitre arrière (8).

12. Structure de toit selon l'une des revendications 1 à 11, **caractérisée en ce que** la partie transversale de cadre (18) arrière du cadre de module (12) forme un tronçon de couverture de toit (39), séparant l'ouverture de toit avant (11) de l'ouverture de toit arrière (22).

13. Structure de toit selon l'une des revendications 1 à 12, **caractérisée en ce que**, lorsque le toit à lamelles (10) est ouvert, la lamelle arrière (36) est disposée au-dessus du tronçon de couverture de toit (39), sans entraver l'articulation de la vitre arrière (8).
